# EUROPEAN PATENT APPLICATION

(11) **EP 4 759 859 A1**
(43) Date of publication of application: **17.06.2026**
(21) Application number: 25222602.2
(22) Date of filing: 11.12.2025
(51) Int. Cl.: C08G 59/66, C08L 63/00, C09D 163/00

(54) **HIGH-SOLID TWO-COMPONENT PAINT SYSTEM**

(30) Priority: 12.12.2024 IT 202400028254
(71) Applicant: Team Segnal S.r.l., 26867 Somaglia (LO) (IT)
(72) Inventor: BIGNAMI, Claudio Giuseppe, I-26841 Casalpusterlengo (LO) (IT)
(74) Representative: Dragotti & Associati S.P.A.

(57) **Abstract**

The present invention relates to a high-solid two-component paint system and its use in road marking.

## Description

The present invention relates to a high-solid two-component paint system and its use in road marking.

### State of the art

The variety of materials that can be used for road markings is frequently classified according to the type of material: paint, thermoplastic coating, plural component system or tape.

In addition, materials are classified according to the solvent in which the coating's binding polymer is carried. In this case, there are solventborne systems, waterborne systems, solvent-free systems and very low-solvent systems also referred to as high-solid.

The duration of residual reflectance, as a performance term for the various types of coating, is instead used for the purpose of a more specific classification of the various materials.

There are also materials referred to as "cold-plastic", in which liquid monomers (acrylates) are mixed with pigments, fillers and anti-slip materials to form the base component, which, once mixed with the catalyst (e.g. benzoyl peroxide), will cure directly on the road surface. The marking coating thus obtained is exceptionally hard, adherent and durable.

Adding the necessary amount of catalyst to initiate polymerisation is a procedure that requires high dosage precision and specialised equipment. Overdoses can lead to over-accelerated and rapid reactions that do not allow the product to be workable. Low dosages may instead lead to incomplete conversion of monomers to polymer and their subsequent dispersion in the environment. These products are quite sensitive to moisture and temperature, which necessitates the use of special formulations that sometimes include either an accelerator or a retarder as required. If applied correctly, polymerisation is completed within 20-30 minutes. With the surface deposition of correctly selected glass beads, high retro-reflection can be achieved. This type of coating is mainly used on high traffic roads and pedestrian crossings. Among the main risks associated with the use of cold-plastic are the monomers, which in addition to being flammable, can undergo uncontrolled polymerisation. Another serious risk is associated with the catalyst, which requires special labelling and transport.

Due to these limitations, these products, although versatile, with minimal environmental impact at the time of application and with excellent coating properties, cannot meet GPP (green public procurement) requirements for environmentally friendly products. In fact, acrylic monomers have an intense and pungent odour with an unpleasant and irritating effect on the user.

The so-called high-solids systems are two-component epoxy, urethane and their derivatives.

The chemical reaction that occurs in two-component products takes place directly at the application site (*in situ*). This chemistry ensures the formation of very durable road marking coatings that can be used for up to five years even on heavily trafficked roads. In the most commonly used systems, one of the components contains soluble reactive resin, pigments and fillers and the other the second reactive component (catalyst/hardener).

The production/application process is summarised in the diagram below.

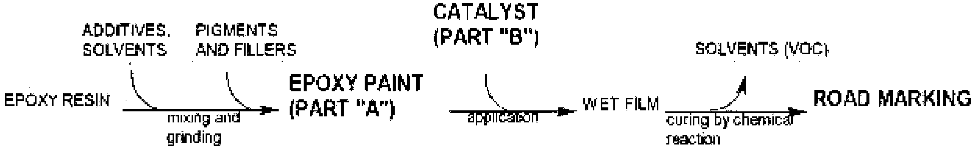

### Key:

*epoxy resin*
*additives, solvents, pigments and fillers, solvents (VOC)*
*epoxy paint (part "A")*
*catalyst (part 'B')*
*wet film*
*road marking*
*mixing and grinding, application, curing by chemical reaction*

These materials are mainly used for linear marking.

In epoxy/amine systems, highly viscous epoxy resins require the use of solvents to be brought to a production condition useful for dispersing fillers and pigments.

Due to a generally slow reaction that may take up to hours after application before curing, pre-mixing of the two reactive components in the application tank is possible. All epoxy systems are formulated for easy-to-use mix ratios such as 1:1 or 1:2. Epoxy coatings are not flexible, but hard and very durable. They typically have a high affinity for glass beads, which are essential for increasing the durability of the applied road markings. The drawback is poor resistance to ultraviolet radiation, which causes them to turn yellow. However, they can be successfully applied in various environmental conditions, in extreme cases even on slightly damp road surfaces.

The VOC content of such epoxy paints is high and can reach up to 600 g/l.

Simple or modified polyurethane systems used or usable in road markings are, as a general rule, similar to epoxy/amine systems. A reactive resin (polyol) is combined with a polyisocyanate to generate a polyurethane coating *in situ.*

The first limitation of this product is the high cost of its components. The second consideration is the presence of isocyanates, which is often related to allergic sensitisation.

Products of a polyurethane nature have a VOC content similar to the previous one (600 g/I).

### Summary of the invention

An aim of the present invention is to make available an application technology that is superimposable and substitutable for cold-plastic, with an advantage in terms of occupational safety and environmental impact.

As described above, cold-plastic is a type of coating mainly used on pedestrian crossings. This type of product is mainly employed in an urban setting frequented, often heavily, by the metropolitan population. In this context, problems related to the odour of aggressively unpleasant and irritating acrylic monomers cannot only concern the workers, who are trained in the use of these hazardous materials and equipped with the precautionary measures to prevent occupational diseases, but also the public passing by and living in the vicinity of work sites where the application of the coating is carried out for road maintenance.

An aim of the present invention is to make available road marking coatings with high thickness and high durability.

The present inventors have created a paint product with a modest impact on occupational safety and public health in general, while guaranteeing the same performance as "traditional" cold-plastic without any particular variations in site productivity.

The inventors have surprisingly found that the main purposes described above are achieved with a two-component paint system according to claim 1, with its use in road marking according to claim 6, with a coating film according to claim 7 and with a process for obtaining said coating film according to claim 8.

### Definitions

Unless otherwise defined, all the terms of the art, notations and other scientific terms used herein are intended to have the meanings commonly understood by those skilled in the art to which this description belongs. In some cases, terms with commonly understood meanings are defined herein for clarity's sake and/or ready reference; the insertion of such definitions in the present description must therefore not be interpreted as representative of a substantial difference with respect to what is generally understood in the art.

The terms "**approximately**" and "**about**" used in the text refer to the range of experimental error that is inherent in performing an experimental measurement.

The terms "**comprising**", "**having**", "**including**" and "**containing**" are to be understood as open terms (i.e. the meaning "comprising, but not limited to") and are to be considered as a support also for terms such as "essentially consist of", "essentially consisting of", "consist of" or "consisting of".

The terms **"**essentially **consisting of**", "**essentially consist of**" are to be understood as semi-closed terms, which means that no other ingredient affecting the new features of the invention is included (optional excipients may therefore be included).

The terms "**consist of**", "**consisting of**" are to be understood as closed terms.

The term "**high solid**" refers to systems with a solvent content comprised between 30% and 10% by volume, preferably less than 20%.

The term "**high-boiling solvent**" refers to a solvent with a vapour pressure at 293.15K of less than 0.01kPa (not VOC).

The indicated vapour pressure determines the limit above which a solvent is considered "VOC".

The term "**low-boiling solvent**" refers to a solvent that falls into the category of VOC-classified solvents with Maximum Incremental Reactivity (MIR) values of less than 1.00. The MIR value of less than 1.00 places the "low-boiling" solvent in the category of solvents potentially amendable by VOC classification. (Environmental Protection Agency).

### Detailed description of the invention

The inventors have surprisingly found a high-solid two-component paint system for road markings that is advantageous in terms of occupational safety and environmental impact.

An object of the present invention is a two-component paint system with a solvent content comprised between 30% and 10% by volume comprising:
- a first component (component A) comprising an epoxy oligomer selected from diglycidyl ether of Bisphenol A or diglycidyl ether of Bisphenol F and a reactive diluent with oxyranic functionality;
- a second component (component B) comprising a mercaptan oligomer and an amine catalyst, preferably a Lewis base.

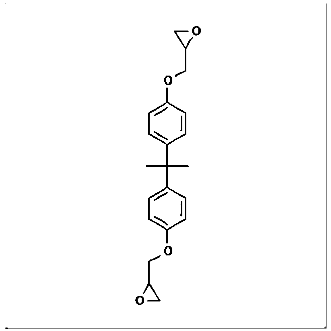

### Diglycidyl ether of Bisphenol A

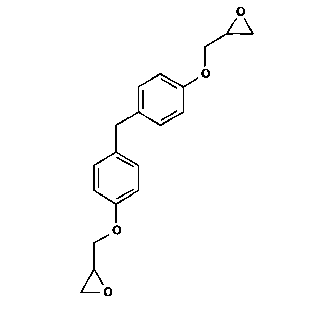

### Diglycidyl ether of Bisphenol F

In a preferred embodiment, the reactive diluent with oxyranic functionality is selected from the group comprising neopentyl glycol diglycidyl ether, 2-ethylhexyl glycidyl ether, 1,6-hexanediol diglycidyl ether, polyoxypropylene glycol diglycidyl ether, trimethylolpropane triglycidyl ether, poly(tetramethylene oxide) diglycidyl ether, C₁₂-C₁₄-glycidyl ether and 1,4-butanediol diglycidyl ether.

In a further preferred embodiment, said solvent is selected from high-boiling, low-boiling solvents and mixtures thereof.

Examples of high-boiling solvents that can be used in the present invention are: Diethylene glycol monobutyl ether; Diethylene glycol monobutyl ether acetate; Ethylene glycol 2-ethylhexyl ether; Propylene glycol phenylether.

Examples of low-boiling solvents that can be used in the present invention are: *n-*butyl acetate, Isopropanol, Butyl propionate, Ethyl propionate.

In a further preferred embodiment, the first component further comprises one or more ingredients selected from the group comprising pigments, fillers and dispersing additives.

In a further preferred embodiment, the mercaptan oligomer of the second component has the following structure:

| |
|---|
| 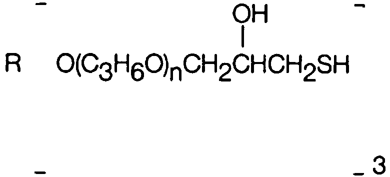 |
| R=Aliphatic Hydrocarbon |
| n=1-2 |

In a further preferred embodiment, the second component further comprises one or more ingredients selected from the group comprising pigments, fillers and dispersing additives.

Examples of pigments that may be used in the present invention are Titanium dioxide, Yellow 65 Mono-azo CAS 652-34-3; Arylide Yellow 74 CAS 6358-31-2; Anthanthrone Red 168 CAS 4378-61-4; Phthalocyanine Green 7 CAS 1328-53-6; Phthalocyanine Blue 15 CAS 147-14-8.

Examples of fillers that may be used in the present invention are carbonates (CaCO₃), barium sulphate and silicates such as kaolin, mica, talc and silicates.

Examples of dispersing additives are polyacrylates.

A further object of the present invention is the use of the two-component paint system with a solvent content comprised between 30% and 10% by volume according to the invention for horizontal road markings.

A further object of the present invention is the coating film obtained by applying the two-component paint system according to the invention to a road surface after mixing components A and B.

Preferably, the curing of the coating film occurs by polymerisation (polycondensation).

A further object of the present invention is a process for obtaining a coating film for horizontal road markings comprising:
i. mixing the first and second components of the two-component paint system according to the invention;
ii. applying a layer of the mixture thus obtained onto a road surface; and
iii. forming the coating film.

A preferred embodiment of the production-application process according to the invention is shown in the following diagram:

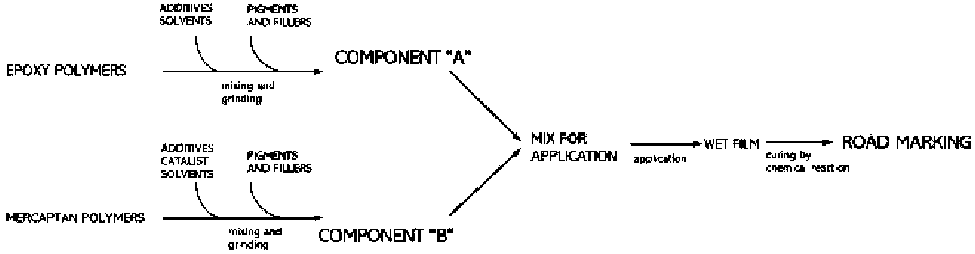

### Key:

*epoxy polymers*
*mercaptan polymers*
*additives, solvents, pigments and fillers*
*component "A"*
*component "B"*
*mix for application*
*wet film*
*road marking*
*catalist* = catalyst
*mixing and grinding, application, curing by chemical reaction*

In a preferred embodiment, application to the road surface is carried out by airless or low pressure spray application, roller application, drip application or pouring application.

The application of the paint system can be followed by the superficial deposition of glass beads, preferably of different particle size, which have the purpose of reflecting the tangent light of the headlights of the vehicles travelling along the road section, so as to improve poor visibility of the road markings in the dark.

The glass beads are preferably spherical in shape and have a smooth surface. Recycled glass is preferably used.

In a preferred embodiment, the glass beads have a refractive index comprised between 1.45 and 2.2, preferably between 1.5 and 2.

In a further preferred embodiment, the glass beads have an average diameter comprised between about 100 and 850 µm.

In a further preferred embodiment, the glass beads are incorporated into the coating between 50% and 80% of their diameter, preferably between 50% and 60%.

The glass beads are usually prepared in vertical furnaces by flame attenuation at about 1200 °C from ground recycled window glass (refractive index RI 1.5) and can provide white marking coatings with an initial RL of about 350 mcd / m² / Ix.

Examples of glass beads available on the market and usable for the purpose of the present invention are the Echostar^{®} products: 63-212, 125-710, 125-850, 125-1180, 212-1180, 212-1400, 300-600.

## Claims

1. Two-component paint system with a solvent content of 30% to 10% by volume comprising:
- a first component comprising an epoxy oligomer chosen from either diglycidyl ether of Bisphenol A or diglycidyl ether of Bisphenol F and a reactive diluent with oxyranic functionality;
- a second component comprising a mercaptan oligomer and an amine catalyst, preferably a Lewis base.

2. Paint system according to claim 1, wherein said reactive diluent with oxyranic functionality is chosen from the group consisting of neopentyl glycol diglycidyl ether, 2-ethylhexyl glycidyl ether, 1,6-hexanediol diglycidyl ether, polyoxypropylene glycol diglycidyl ether, trimethylolpropane triglycidyl ether, poly(tetramethylene oxide)-diglycidyl ether, C₁₂-C₁₄-glycidyl ether and 1,4-butanediol diglycidyl ether.

3. Paint system according to claim 1 or 2, where said solvent is chosen from high-boiling, low-boiling solvents and mixtures thereof.

4. Paint system according to any one of the preceding claims, wherein said first component and/or said second component further comprises one or more ingredients selected from the group consisting of pigments, fillers and dispersing additives.

5. Paint system according to any one of the preceding claims, in which said mercaptan oligomer has the following structure:
| |
|---|
| 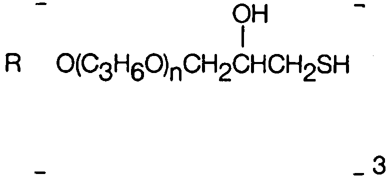 |
| R=Aliphatic Hydrocarbon |
| n=1-2 |

6. Use of the two-component paint system according to any one of the preceding claims for horizontal road marking.

7. Coating film obtained by applying to a road surface the two-component paint system according to any one of claims 1 to 5, after mixing the first and second components.

8. Process for obtaining a coating film for horizontal road marking comprising:
i. mixing the first and second components of the two-component paint system according to any one of claims 1 to 5;
ii. applying a layer of the mixture thus obtained onto a road surface;
iii. forming the coating film.

9. Process according to claim 8, wherein the application onto the road surface is carried out by airless or low pressure spray application, roller application, drip application or pouring application.

10. Process according to claim 8 or 9, further comprising a step of applying glass beads over said layer of step ii).
